Europäisches Patentamt

European Patent Office

Office européen des brevets

(19)

(11) Publication number: **0 084 712**
A2

# (12) EUROPEAN PATENT APPLICATION

(21) Application number: **82306441.5**

(22) Date of filing: **03.12.82**

(51) Int. Cl.³: **H 01 H 3/24,** B 62 D 53/12,
H 01 H 35/34

(30) Priority: **03.12.81 AU 1805/81**
**04.12.81 AU 1833/81**

(43) Date of publication of application: **03.08.83**
**Bulletin 83/31**

(84) Designated Contracting States: **AT BE CH DE FR GB IT**
**LI LU NL SE**

(71) Applicant: **HOCKNEY ENGINEERING PTY. LIMITED, 2**
**Dupas Street, Smithfield New South Wales 2164 (AU)**

(72) Inventor: **Dingle, John Trevor, 14/10 Ray Street,**
**Turramurra New South Wales 2074 (AU)**

(74) Representative: **JENSEN & SON, 8 Fulwood Place High**
**Holborn, London WC1V 6HG (GB)**

(54) Fluid activated switch.

(57) A service line connector (80) for a motor vehicle, the
connector (80) includes an air operated diaphragm (94)
which is moved between two portions to couple electric
contacts (84, 86) and pneumatic lines (82, 87) of the connec-
tor.

The present invention relates to electrical connectors and more particularly but not exclusively to electrical connectors used on motor vehicles particularly heavy motor vehicles such as road tankers and articulated vehicles.

In the transportation of inflammable liquids or gases or explosive liquids or gases, dangerous situations often occur if the tanker carrying the liquid or gas begins leaking. In such circumstances it is desirable to disconnect the battery from the electrical system of the vehicle. This disconnection should be conducted so as to inhibit electrical arcing thereby minimising the possibility of initiating an explosion or causing igniting of the inflammable liquid or gas.

Conventionally a primary switch is used such as a blade switch, which is operated manually to disconnect the battery from the electrical circuit of the vehicle. Although these knife type switches minimise the possibility of arcing, arcing may still take place. Additionally these switches may not be located in a convenient position for operation by the driver of the vehicle.

The present invention also relates to articulated vehicles and more particularly to the fifth wheel of articulated vehicles.

It is a disadvantage of articulated vehicles that the service lines, such as air and electric lines, must be manually coupled or uncoupled when the prime mover is being attached to or uncoupled from its trailer. Additionally if the operator omits to disconnect the service lines when uncoupling the trailer, damage to the service lines will result.

It is an object of the present invention to overcome or substantially ameliorate the above disadvantages.

There is disclosed herein an electrical switch comprising a closed hollow housing, a diaphragm extending across the interior of the housing so as to divide the interior of the housing into two spaces, a conduit extending from a first one of said spaces enabling air to be delivered to said first space so that said diaphragm is movable from a first position to a second position by the delivery of air under pressure to said first space, first electrical contact means mounted on said housing and facing said diaphragm, a second electric contact means mounted on said diaphragm adapted to engage said first electrical contact when said diaphragm is is said second position and to be spaced from said first contact when said diaphragm is in said first position.

There is further disclosed herein a fifth wheel for an articulated vehicle, said fifth wheel comprising an upper and lower skid member, said skid members having generally horizontally planar parallel surfaces which in use abut so as to provide skid surfaces for the fifth wheel, a V-shaped recess formed in one of said upper or lower skid members so as to extend inwardly from the periphery thereof to a location past the axis of rotation of the fifth wheel, a king pin fixed to the other of said upper or lower members at a position coaxial with said axis of rotation and adapted to be received within said recess so as to locate said member at a predetermined position for rotation about said axis of rotation, and service line coupling means including a first engaging member attached to one of said upper or lower members and a second engaging member attached to said intermediate member, said engaging members being positioned so as to engage when said skid members are in said predetermined positions, and service lines extending from said engagement members.

A preferred form of the present invention will now be described by way of example with reference to the accompanying drawings, wherein:

Figure 1 schematically depicts in sectioned side elevation the fifth wheel of an articulated vehicle;

Figure 2 is a bottom schematic perspective view of the upper skid assembly of the fifth wheel of Figure 1;

Figure 3 schematically depicts in sectioned side elevation an electrical switch with the contacts thereof engaged;

Figure 4 schematically depicts the switch of Figure 1 with the contacts disengaged;

Figure 5 schematically depicts in sectioned side elevation a switch for service lines such as electric cables and air lines;

Figure 6 is a schematic side elevation of a fifth wheel assembly of an articulated vehicle;

Figure 7 is a schematic perspective bottom view of the upper skid member of the fifth wheel assembly of Figure 1; and

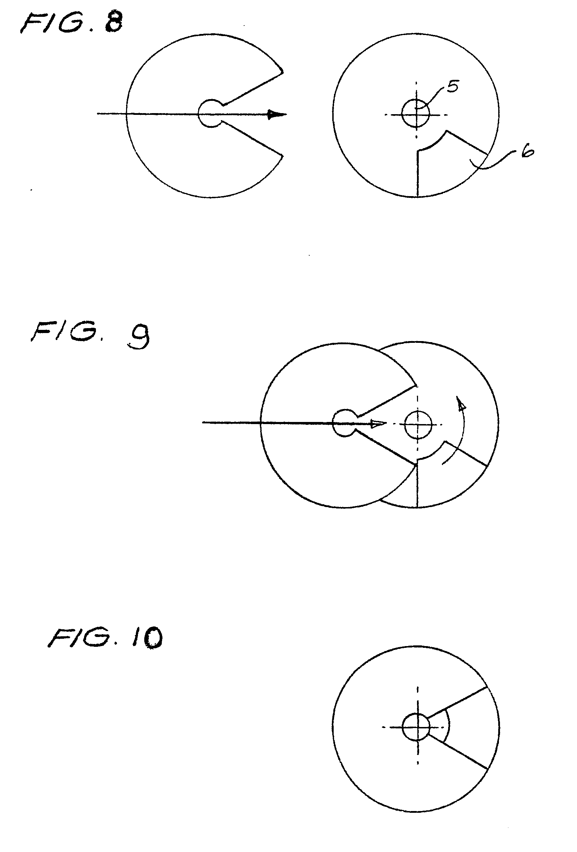

Figures 8 to 10 schematically depict the fifth wheel assembly of Figure 1 during movement towards coupling.

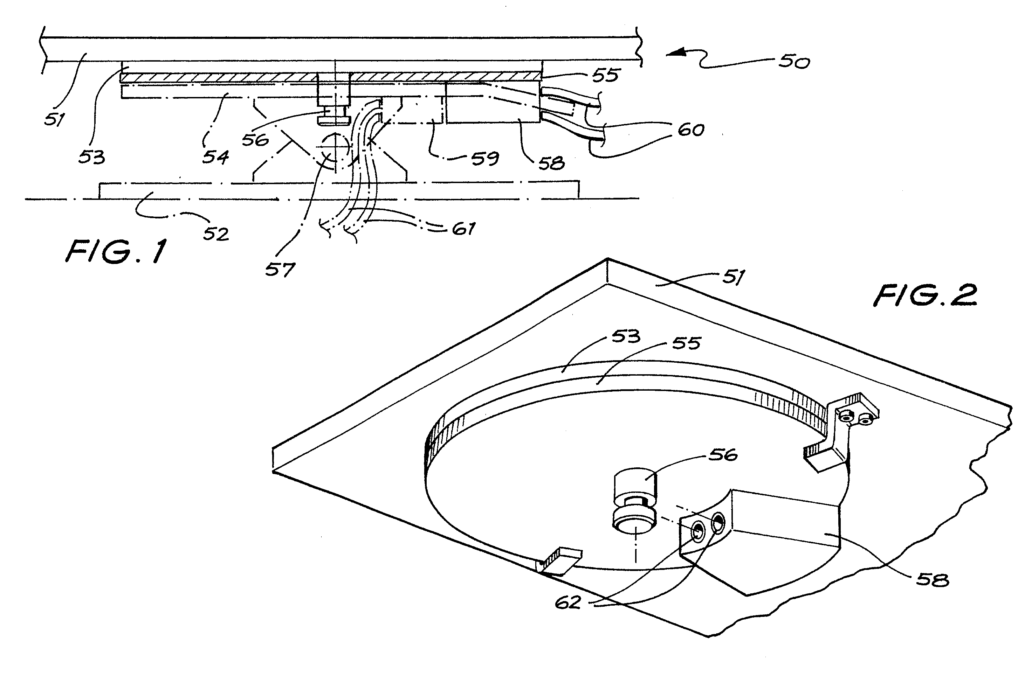

In Figure 1 there is schematically depicted a fifth wheel assembly 50 of an articulated vehicle having a trailer frame 51 attached to a primemover frame 52. The fifth wheel assembly 50 includes an upper skid plate 53 to be coupled to a lower skid plate 54 by means including a king pin 56. The lower skid plate 54 is pivotally coupled by means of a pin 57 to the frame 52 to enable pivoting of the skid plate 54 about a generally horizontal axis. The king pin 56 enables relative rotation between the skid plates 53 and 54 about a generally vertical axis.

Located between the skid plates 53 and 54 is an intermediate skid member 55 which is rotationally fixed to the lower skid member 54 while it is allowed to rotate relative to the upper skid member 53. The intermediate skid member 55 is provided with a service line coupling part 58 which is generally wedge-shaped to engage with a wedge-shaped recess formed in the lower skid plate 54. Additionally the lower skid plate 54 is provided with a generally wedge-shaped recess of complementary configuration to that of the part 58 to provide for correct relative location of the intermediate skid member 55 with the lower skid plate 54. Additionally the lower skid plate 54 is provided with a service line coupling part 59 which co-operates with the part 58 to connect the service line 60 with the service lines 57.

In operation of the above, the trailer of the articulated vehicle is easily coupled to the prime mover without having to separately connect service lines by the automatic engaging of the parts 58 and 59 to connect the service lines 57 and 60. Additionally by use of the intermediate skid member 55 a conventional fifth wheel arrangement using skid plates may easily be adapted to enable the use of the parts 58 and 59 by merely extending the length of the king pin 56.

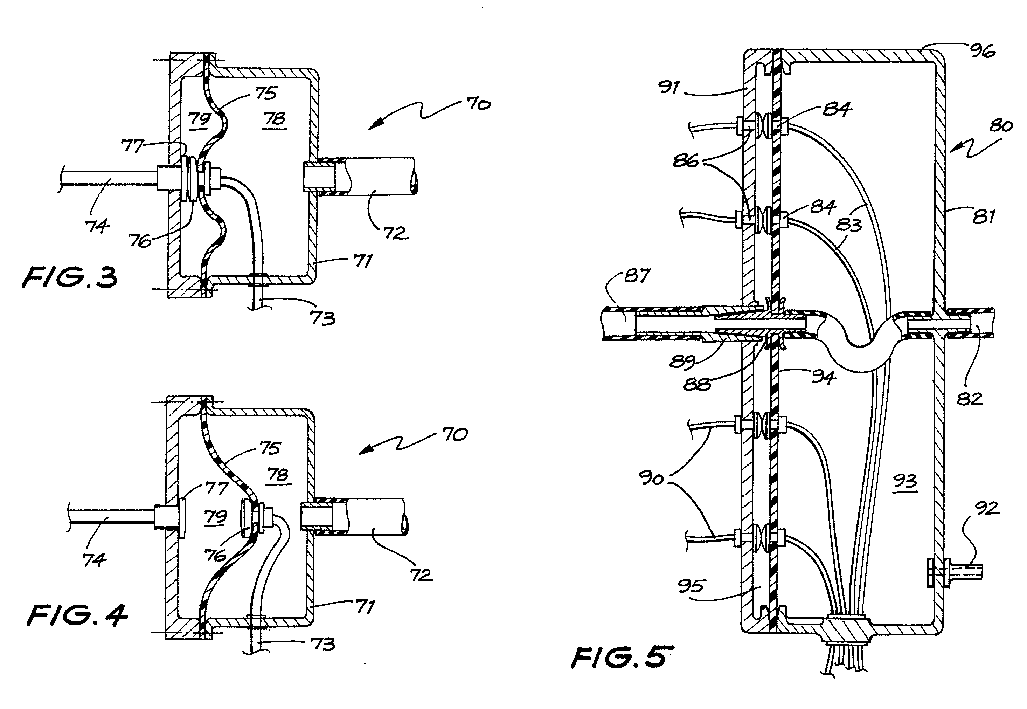

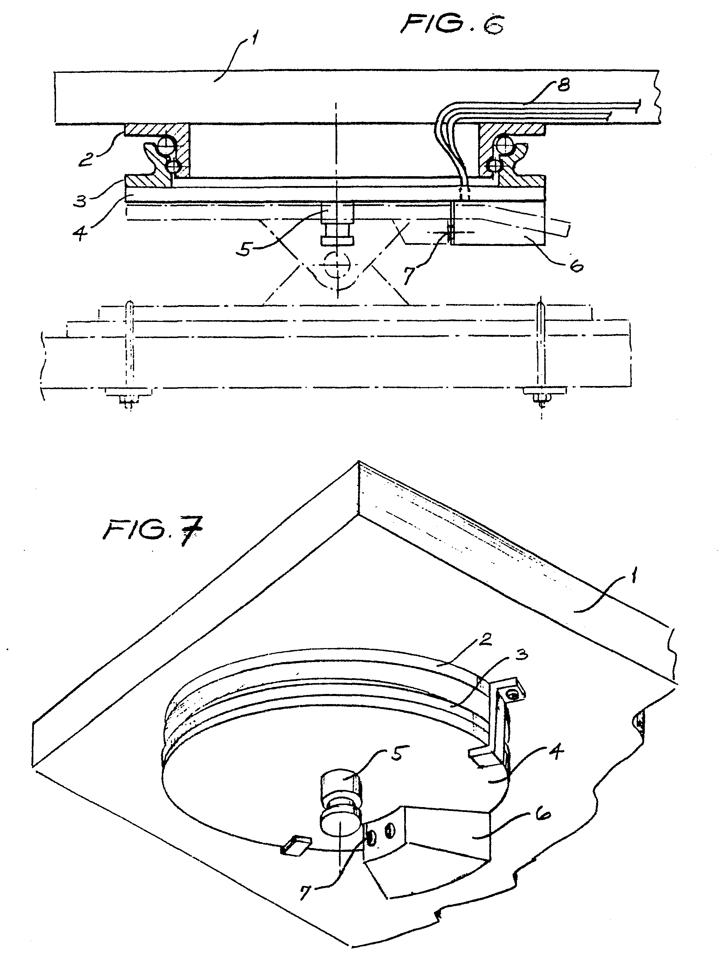

In Figures 3 and 4 there is schematically depicted an electrical switch 70 having a closed housing 71 with its interior divided into two chambers 78 and 79 by a flexible diaphragm 75. From the chamber 78 extends an air line 72 which enables air under pressure to be delivered to the chamber 78 so as to move the diaphragm 75 from the position depicted in Figure 4 to the position depicted in Figure 3.

Attached to the housing 71 at one end is an electric contact 77 from which extends an electric cable 74. The electric contact 77 is adapted to engage the electric contact 76 which is attached to the diaphragm 75 while extending from the contact 76 is an electric cable 73 which is relatively flexible so as to not inhibit movement of the diaphragm 75.

In operation of the above device the diaphragm 75 would be biased to the position depicted in Figure 4, either under its natural resilience or by pressure build up in the chamber 79. The two contacts 76 and 77 would be brought into engagement upon delivery of air under pressure to the chamber 78.

The above described preferred form of electrical switch 70 has the advantage that the switch 70 could be mounted adjacent the battery of a tanker vehicle while operation of the switch 70 may be governed from a position remote from the position 70.

Now with reference to Figure 5 wherein there is depicted a switch 80 which is adapted to connect a plurality of electrical lines and/or air lines. In the particular switch 80 the electric lines 83 are connected to the lines 30 while the air line 82 is connected to the air line 87. The switch 80 includes a hollow sealingly closed housing 81 divided into two chambers 93 and 95 by a transversely extending flexible diaphragm 94. Attached to the diaphragm 94 are a plurality of electric contacts 84 from which the electric lines 83 extend.  Attached to the end wall 91 of the housing 81 are a second set of electric contacts 86 from which the electric lines 90 extend.  Additionally there is attached to the flexible diaphragm 94 an air line 82 which terminates in a male conical coupling 88.  Fixed to the end wall 91 is the air line 87 which terminates in a hollow female coupling 89 which is adapted to sealingly co-operate with the male coupling 88.  Also extending to the interior of the housing 81 is an air line 92 to deliver air under pressure to the chamber 93.

In operation of the above switch 80, the two portions of the housing 81, i.e. the right hand portion 96 which includes the diaphragm 94 and the end wall 91 are brought into an abutting relationship such that the end wall 91 is fixed to the part 96.  In such a location the contacts 84 and 86 and couplings 88 and 89 would be brought into contact.  Thereafter air would be delivered to the chamber 93 forcing the diaphragm 94 towards the end wall 91 thereby ensuring good electrical contact and connection of the couplings 88 and 89.

A modification of the above device could include the air line 82 extending through the interior of the diaphragm 94 or alternatively the air line 82 has means to deliver air to the chamber 93 thereby enabling the omission of the air line 92.

In Figure 6 there is schematically depicted a fifth wheel assembly 10 which couples the chassis 1 of a trailer to the chassis 9 of a prime mover.

Attached to the chassis 1 is an upper skid assembly 11 which includes an upper skid plate 3 which rotatably engages a base 2 by means of a ball raise assembly 12 so that the upper skid plate 3 is rotatable about the axis 13. The upper skid plate 3 abuts a lower skid plate 4 which is pivotally coupled to the chassis 9 by means of eyelet members 14 and pin 15 so that the plate 4 is rotatable about a horizontal axis extending generally transverse of the chassis 9.  Fixed to the upper skid plate 3 is a king pin 5 which is engaged within the recess 16 formed in the lower skid plate 4.  The recess 16 terminates in a generally circular passage 17 within which the king pin 5 is located. The king pin 5 and recess 16 co-operate to correctly locate the two skid plates 3 and 4. More particularly, the recess 16 is tapered towards the passage 17 to aid in the guiding of the king pin 5 to its correct operating position generally coaxial with the axis 13.

Turning now particularly to Figure 7, the upper skid plate 4 is further provided with an engagement member 6 from which extend service lines 8. The engagement member 6 is tapered and is located so as to be engaged within the recess 16 and to co-operate with the tapering side surfaces thereof to position the engagement member at a predetermined location relative to the skid plate 4. Attached to the skid plate 4 is a further engagement member 18 which is positioned to engage the other engagement member 6 when the upper skid plate 3 is located at a predetermined position with the king pin 5 coaxial with the axis 13. Service lines 19 extend from the engagement member 18.

Both engagement members 6 and 18 are provided with abutting joints 7 which, when contacted, couple the service lines 8 with the service lines 19 so as to provide for the continuity of air or hydraulic lines together with electrical lines. The switch described in Figures 3 to 5 could be employed in the engagement members 6 and 18.

In construction of the above device, it may be necessary to provide the abutting joints 7 with a predetermined amount of resilience so as to provide for a firm coupling of the joints 7. This resilience could be provided by supporting the joints 7 of springs or resilient pads.

The claims defining the invention are as follows:

1.    An electrical switch comprising a closed hollow housing, a diaphragm extending across the interior of the housing so as to divide the interior of the housing into two spaces, a conduit extending from a first one of said spaces enabling air to be delivered to said first space so that said diaphragm is movable from a first position to a second position by the delivery of air under pressure to said first space, first electrical contact means mounted on said housing and facing said diaphragm, a second electric contact means mounted on said diaphragm adapted to engage said first electrical contact when said diaphragm is is said second position and to be spaced from said first contact when said diaphragm is in said first position.

2.    The switch of claim 1 further including a second conduit mounted on said housing and facing said diaphragm, a third conduit attached to said diaphragm and facing said second conduit so that when said diaphragm is in said second position said second and third conduits are sealingly connected to provide for the passage of air under pressure therethrough.

3.    The switch of claim 1 or 2 wherein said first electric contact means includes a plurality of contacts and said second electric contact means includes a plurality of contacts.

4.    The electrical switch of any one of claims 1 to 3 wherein said diaphragm is resiliently biassed to said first position.

5.    A fifth wheel for an articulated vehicle, said fifth wheel comprising an upper and lower skid member, said skid members having generally horizontally planar parallel surfaces which in use abut so as to provide skid surfaces for the fifth wheel, a V-shaped recess formed in one of said upper or lower skid members so as to extend inwardly from the periphery thereof to a location past the axis of rotation of the fifth wheel, a king pin fixed to the other of said upper or lower members at a position coaxial with said axis of rotation and adapted to be received within said recess so as to locate said member at a predetermined position for rotation about said axis of rotation, and service line coupling means including a first engaging member attached to one of said upper or lower members and a second engaging member attached to said intermediate member, said engaging members being positioned so as to engage when said skid members are in said predetermined positions, and service lines extending from said engagement members.

6. The fifth wheel of claim 5 further including an alignment member on said one skid member adapted to be engaged within said recess so as to locate said one skid member in said predetermined position.

7. The fifth wheel of claim 6 wherein said alignment member has a tapered surface of corresponding inclination to the internal surface of said recess.

8. The fifth wheel of any one of claims 5 to 7 wherein said upper or lower skid member has an intermediate skid member located between the primary skid member and the other of said upper or lower skid members, and one of said engaging members is attached to said intermediate skid member.

9. An electric switch substantially as hereinbefore described with reference to the accompanying drawings.

10. A fifth wheel for an articulated vehicle substantially as hereinbefore described with reference to the accompanying drawings.

FIG.1

FIG.2

FIG.3

79 75 78 70

77 72

74 76 71

73

FIG.4

75 70

77 78

74 79 72

76 71

73

FIG.5

91 96

84 80

86

84 81

83

87

89

88 94 82

90 93

95 92

2/4

0084712

FIG.6

FIG.7

4/4

0084712

FIG. 8

5

6

FIG. 9

FIG. 10